# EUROPÄISCHE PATENTSCHRIFT

(11) **EP 0 556 583 B1**
(45) Veröffentlichungstag und Bekanntmachung des Hinweises auf die Patenterteilung: **17.07.1996**
(21) Anmeldenummer: 93100855.1
(22) Anmeldetag: 21.01.1993
(51) Int. Cl.: H02J 9/00, G06F 1/26, H02M 7/08

(54) **Einrichtung zur galvanisch getrennten Gleichspannungsversorgung eines Mikrorechners aus einer Wechselspannungsquelle**
Device for a galvanic separated DC supply of a micro-computer from an AC source
Dispositif pour l'alimentation en courant continu galvaniquement séparée d'un micro-calculateur à partir d'une source de tension alternative

(30) Priorität: 21.02.1992 DE 4205254
(43) Veröffentlichungstag der Anmeldung: 25.08.1993
(73) Patentinhaber: Hella KG Hueck & Co., D-59552 Lippstadt (DE)
(72) Erfinder: Schulte, Peter, W-5760 Arnsberg 2 (DE); Schmees, Siegfried, W-4787 Geseke (DE); Müller, Bernhard, W-5760 Arnsberg 2 (DE)

(56) Entgegenhaltungen:
- EP-A- 0 493 305
- CH-A- 671 308
- DE-A- 3 742 188
- DE-A- 4 015 351
- SOVIET INVENTIONS ILLUSTRATED, Section El, Woche 8428, 22. August 1984, DERWENT PUBLICATIONS LTD., London, U 24

## Beschreibung

Die Erfindung betrifft eine Einrichtung zur galvanisch getrennten Gleichspannungsversorgung eines Mikrorechners aus einer Wechselspannungsquelle. Es ist bekannt, Mikrorechner mit Gleichspannung aus einer Wechselspannungsquelle zu versorgen, wobei die Wechselspannungsquelle über einen Transformator zur galvanischen Trennung, einen Gleichrichter, einen Spannungsregler zur Spannungsstabilisierung, dem ein erster Kondensator als Pufferkondensator zugeordnet ist, mit einem Mikrorechner verbunden ist.

Bei den bekannten Einrichtungen erweist sich als nachteilig, daß bei einem Ausfall oder bei Schwankungen der Wechselspannung der Wechselspannungsquelle der Ausfall oder die Schwankungen der Wechselspannung der Wechselspannungsquelle nicht rechtzeitig erkannt werden und somit der mit Spannung zu versorgende Mikrorechner nicht rechtzeitig sicherheitsrelevante Schaltungen einleiten kann. In diesem Zusammenhang erweist sich als nachteilig, daß bei einem Ausfall der Wechselspannungsquelle oder bei starken Schwankungen der Wechselspannung der Wechselspannungsquelle keine überbrückung des Netzausfalls vorgesehen ist, so daß insbesondere bei der Verwendung in Flugzeugen die Sicherheit bei dem Betrieb von Flugzeugen gefährdet ist, wenn die konstante Gleichspannungsversorgung von Mikrorechnern nicht gewährleistet wird oder die Mikrorechner bei einem Ausfall der Wechselspannungsquelle oder bei Schwankungen der Wechselspannung der Wechselspannungsquelle nicht rechtzeitig sicherheitsrelevante Schaltungen durchführen können.

Der Erfindung liegt die Aufgabe zugrunde, eine Einrichtung zur galvanisch getrennten Gleichspannungsversorgung eines Mikrorechners aus einer Wechselspannungsquelle zu schaffen, die einfach und kostengünstig ist und eine zuverlässige Netzausfallüberbrückung aufweist.

Die Aufgabe wird erfindungsgemäß durch die Merkmale des Anspruchs 1 gelöst.

Es ist von Vorteil, daß bei einer Einrichtung, die eine Wechselspannungsquelle und einen Transformator aufweist, dessen Primärwicklung mit der Wechselspannungsquelle verbunden ist, die einen ersten Gleichrichter aufweist, der mit einer Sekundärwicklung des Transformators verbunden ist und die einen Spannungsregler aufweist, der zum einen über eine erste Klemme sowohl mit dem Ausgang des ersten Gleichrichters als auch über einen ersten Kondensator mit Masse verbunden ist und zum anderen mit dem mindestens einen Mikrorechner verbunden ist, daß eine zweite Klemme in der Verbindung zwischen der Sekundärwicklung des Transformators und dem ersten Gleichrichter angeordnet ist, die mit dem Mikrorechner verbunden ist, wobei der Mikrorechner Fehlersignale erzeugt, wenn die Spannung an der zweiten Klemme von einer Sollspannung abweicht, wodurch auf besonders einfache und kostengünstige Weise gewährleistet wird, daß dem Mikrorechner ein Spannungssignal zugeführt wird, das der Primärspannung proportional ist, jedoch galvanisch getrennt von der Primärspannung ist. Es ergibt sich somit eine besonders einfache, unverzögerte und zuverlässige Möglichkeit der galvanisch getrennten überwachung der primären Wechselspannung der Wechselspannungsquelle, mit einem Spannungssignal, das eine Schädigung des Mikrorechners ausschließt.

In diesem Zusammenhang ist es besonders vorteilhaft, daß eine Spannungsanpaßeinrichtung und eine Schutzeinrichtung in der Verbindung zwischen der zweiten Klemme und dem Mikrorechner angeordnet sind, so daß auf einfache und kostengünstige Weise sichergestellt wird, daß dem Mikrorechner ein Spannungssignal zugeführt wird, daß dieser, ohne Schaden zu nehmen, verarbeiten kann und daraus z. B. die Effektivspannung der zu kontrollierenden Spannung berechnen kann und z. B. auftretende Spannungsspitzen oder Frequenzen in der Spannung, die dem Mikrorechner schaden könnten, eliminiert werden, so daß der Mikrorechner jederzeit einen Fehler in der primären Wechselspannung von der Wechselspannungsquelle erkennen kann und demgemäß Fehlersignale erzeugen kann, wenn die Spannung an der zweiten Klemme von einer vorgegebenen Sollspannung abweicht.

Es ist von Vorteil, daß eine Schalteinrichtung mit dem Mikrorechner verbunden ist und in Abhängigkeit von den Fehlersignalen des Mikrorechners umsteuerbar ist und daß ein dritter Kondensator, dessen erste Elektrode mit Masse und dessen zweite Elektrode zum einen mit dem Transformator verbunden ist und zum anderen über die Schalteinrichtung und einen dritten Widerstand mit dem Spannungsregler verbunden ist, weil somit auf einfache und kostengünstige Weise mit hoher Zuverlässigkeit sichergestellt wird, daß z. B. bei einem auftretenden Ausfall der Wechselspannungsquelle durch ein durch den Mikrorechner erzeugtes Fehlersignal der dritte Kondensator über den dritten Widerstand mit dem Spannungsregler verbunden wird, so daß sichergestellt wird, daß über eine vorgegebene Zeit, die durch die in dem dritten Kondensator gespeicherte Energie und dem aus dem dritten Kondensator entnommenen Laststrom bestimmt ist, der Spannungsregler in der Lage ist, dem Mikrorechner eine Spannung zuzuführen, die sicherstellt, daß dieser ordnungsgemäß arbeitet und z. B. nach Erkennen eines Fehlers in der primären Wechselspannungsversorgung Schaltfunktionen durchführen kann, die sicherstellen, daß z. B. nach einem kompletten Ausfall der Wechselspannungsversorgung keine gefährlichen Situationen entstehen können. Dazu kann der Mikrorechner z. B. Signale erzeugen, die eine Notstromversorgung aktivieren oder aber andere Mikrorechner oder Bordcomputer in eine Notlauffunktion oder Schlaffunktion schalten. Zudem kann bewirkt werden, daß bestimmte Schaltzustände des Mikrorechners oder von Mikrorechnern, die mit dem Mikrorechner verbunden sind, gespeichert werden bis die Wechselspannungsversorgung wieder einwandfrei funktioniert.

Durch Verwendung des zusätzlichen dritten Kondensators wird eine besonders einfache und kostengünstige Ausführungsform der Einrichtung zur Spannungsversorgung des Mikrorechners ermöglicht, da der erste Kondensator eine geringe Kapazität aufweisen kann und der dritte Kondensator, wenn er mit einer höheren Betriebsspannung als der erste Kondensator betrieben wird, ebenfalls eine einfache und kostengünstige Bauart und Ausführung aufweisen kann, ohne daß die Funktion der Einrichtung eingeschränkt wird.

Dadurch, daß die Spannungsanpasseinrichtung aus einer Reihenschaltung eines ersten Widerstands und einer ersten Diode in der Verbindung zwischen der zweiten Klemme und dem Mikrorechner und einem zweiten Widerstand zwischen der ersten Diode und Masse besteht, ergibt sich der Vorteil, daß zum einen durch den ersten Widerstand eine Strombegrenzung vorgenommen werden kann und durch die Verwendung der ersten Diode in Durchlaßrichtung dem Mikrorechner nur Halbwellen des Spannungssignals von der zweiten Klemme zugeführt werden, aus denen dieser einfach z. B. den Effektivwert der an der zweiten Klemme anliegenden Wechselspannung, die proportional zu der Primärspannung ist, berechnen kann. Zudem wird durch den Spannungsteiler, gebildet aus dem ersten und zweiten Widerstand sichergestellt, das dem Mikrorechner nur Spannungen zugeführt werden, die dieser vorarbeiten kann.

Es ist von Vorteil, daß die Schutzeinrichtung einen Tiefpaßfilter, bestehend aus einem zweiten Kondensator und dem ersten Widerstand, aufweist, wodurch auf einfache Weise kostengünstig sichergestellt wird, daß hochfrequente Störungen in dem Spannungssignal von der zweiten Klemme, die den Mikrorechner schädigen oder stören könnten, herausgefiltert werden.

Dadurch, daß die Schutzeinrichtung eine erste Z-Diode aufweist, die in der Verbindung zwischen der ersten Diode und Masse angeordnet ist, ergibt sich der Vorteil, daß die Spannung die dem Mikrorechner über die zweite Klemme zugeführt wird, einfach und kostengünstig begrenzt wird, wodurch der Mikrorechner vor hohen Spannungen geschützt wird und nicht beschädigt werden kann.

Dadurch, daß die zweite Elektrode des dritten Kondensators über eine dritte Klemme sowohl mit dem Transformator als auch über eine zweite Z-Diode mit Masse verbunden ist, ergibt sich der Vorteil, daß der dritte Kondensator zum einen jederzeit auf seine Nennspannung aufgeladen wird und zum anderen auf einfache und kostengünstige Weise eine Spannungsbegrenzung durch die Z-Diode erreicht wird.

Es ist vorteilhaft, daß ein zweiter Gleichrichter zum einen über einen vierten Widerstand mit der dritten Klemme verbunden ist und zum anderen mit einer Sekundärwicklung des Transformators verbunden ist, wodurch zum einen sichergestellt wird, daß der dritte Kondensator über den vierten Widerstand mit einer vorgegebenen Zeitkonstanten auf seine Nennspannung aufgeladen wird, und zum anderen auf einfache und kostengünstige Weise erreicht wird, daß der dritte Kondensator mit einer höheren Spannung geladen werden kann, als z. B. der erste Kondensator, wodurch der dritte Kondensator bei gleicher Speicherenergie kleiner dimensioniert werden kann und eine einfache und kostengünstige Bauart aufweisen kann, als wenn diese aus der gleichen Spannung versorgt würde, wie z. B. der erste Kondensator.

Vorteilhaft ist es, daß in der Verbindung zwischen der Wechselspannungsquelle und der Primärwicklung des Transformators eine Sicherungseinrichtung angeordnet ist, wodurch z. B. bei überspannungen eine Abschaltung der dem Transformator zugeführten Spannung erfolgen kann. Zu diesem Zweck können in der Sicherungseinrichtung z. B. Sicherungen und/oder Dioden angeordnet sein.

Es ist von Vorteil, wenn die Einrichtung als Gleichspannungsversorgungseinrichtung von Mikrorechnern in Bordnetzen von Flugzeugen Verwendung findet, da somit sichergestellt wird, daß jederzeit Fehler in der primären Wechselspannungsversorgung erkannt werden und bei Ausfällen oder starken Schwankungen der primären Wechselspannung eine zuverlässige Netzausfallüberbrückung eingeschaltet wird.

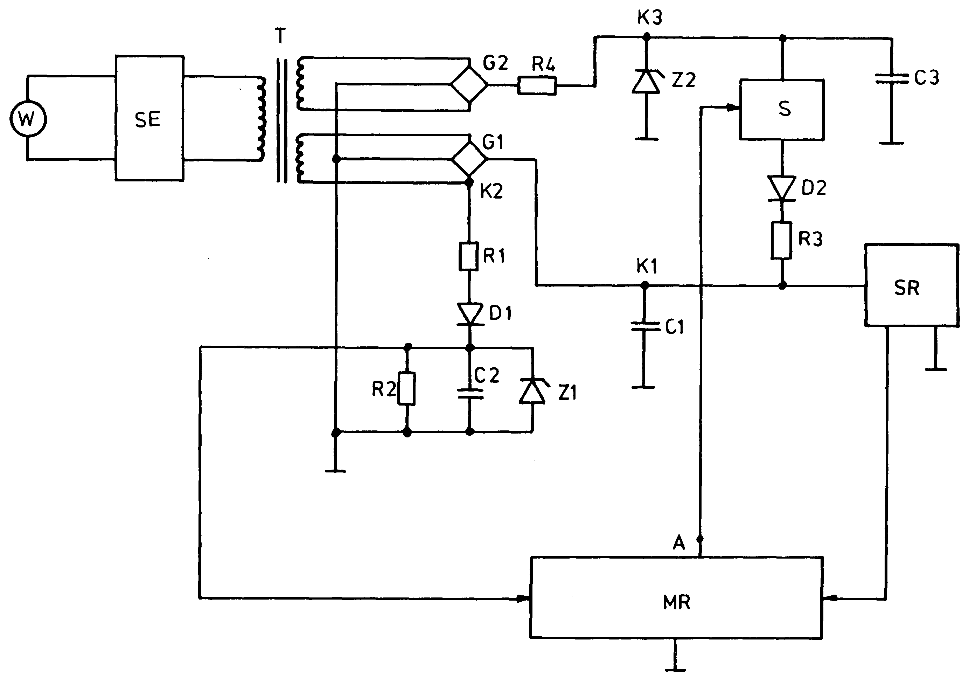

Ein Ausführungsbeispiel des Erfindungsgegenstands ist in der einzigen Zeichnung dargestellt und wird im folgenden anhand dieser Zeichnung näher beschrieben.

Die einzige Figur zeigt eine Schaltungsanordnung einer erfindungsgemäßen Einrichtung zur galvanisch getrennten Gleichspannungsversorgung eines Mikrorechners (MR) aus einer Wechselspannungsquelle (W).

Die Wechselspannungsquelle (W), die z. B. die Wechselspannungsquelle (W) des Flugzeugs sein kann, ist über eine Sicherungseinrichtung (SE) mit der Primärwicklung eines Transformators (T) verbunden. Die Wechselspannung weist dabei einen Spannungswert von 115 Volt und eine Frequenz von 400 Hertz auf.

Die Sicherungseinrichtung (SE) kann z. B. eine Sicherung enthalten, die als Schmelzsicherung oder Fadensicherung ausgebildet ist. Zudem kann die Sicherungseinrichtung (SE) Schutzdioden enthalten.

Der Transformator (T) weist bei dem hier gezeigten Ausführungsbeispiel zwei Sekundärwicklungen auf, wobei jede der Sekundärwicklungen mit einem Gleichrichter (G1, G2) verbunden ist. Der erste und der zweite Gleichrichter (G1, G2) weisen als Brückengleichrichter neben den Anschlüssen für die Sekundärwicklungen jeweils auch einen Anschluß auf, der mit Masse verbunden ist und jeweils einen Anschluß auf, an den die gleichgerichtete Ausgangsspannung anliegt. Der Ausgang des ersten Gleichrichters (G1) ist über eine erste Klemme (K1) sowohl mit einem Spannungsregler (SR) zur Stabilisierung der Gleichspannung als auch über einen ersten Kondensator (C1) mit Masse verbunden. Der Spannungsregler (SR) ist zur Versorgung des Mikrorechners (MR) mit einer konstanten Gleichspannung elektrisch leitend mit diesem verbunden. Zudem weist der Spannungsregler (SR) einen Masseanschluß auf.

In der Verbindung zwischen der Sekundärwicklung und dem ersten Gleichrichter (G1) ist eine zweite Klemme (K2) angeordnet, an der eine Wechselspannung anliegt, die der primären Wechselspannung der Wechselspannungsquelle (W) proportional ist. Die zweite Klemme (K2) ist über einen ersten Widerstand (R1) und über eine in Durchlaßrichtung geschaltete erste Diode (D1) mit dem Mikrorechner (MR) verbunden. Die erste Diode (D1) bewirkt dabei, daß dem Mikrorechner (MR) nur die positiven Halbwellen des Spannungssignals von der zweiten Klemme (K2) zugeführt werden. Mit einem zweiten Widerstand (R2) in der Verbindung zwischen der ersten Diode (D1) und Masse bildet der erste Widerstand (R1) einen Spannungsteiler zur Spannungsanpassung.

Zum Schutz des Mikrorechners (MR) vor hochfrequenten Spannungen und zerstörenden überspannungen ist in der Verbindung zwischen der zweiten Klemme (K2) und dem Mikrorechner (MR) eine Schutzeinrichtung angeordnet. Ein zwischen der ersten Diode (D1) und Masse angeordneter zweiter Kondensator (C2) und der erste Widerstand (R1) bilden dabei einen Tiefpaßfilter. Parallel zu dem zweiten Kondensator (C2) ist zum Schutz gegenüber Spannungen eine erste Z-Diode (Z1) angeordnet.

Bei dem hier gezeigten Ausführungsbeispiel weist der Transformator (T) eine zweite Sekundärwicklung auf, die mit einem zweiten Gleichrichter (G2) verbunden ist. Auch dieser zweite Gleichrichter (G2) ist mit Masse verbunden und weist einen Ausgang auf, an dem ein gleichgerichtetes Spannungssignal anliegt. Dieser Ausgang des zweiten Gleichrichters (G2) ist über einen vierten Widerstand (R4) und eine dritte Klemme (K3) mit der zweiten Elektrode eines dritten Kondensators (C3) verbunden, dessen erste Elektrode mit Masse verbunden ist. Der dritte Kondensator (C3) wird somit über den vierten Widerstand (R4) aus der Spannung von dem zweiten Gleichrichter (G2) aufgeladen. Zur Spannungsbegrenzung ist die dritte Klemme (K3) über eine zweite Z-Diode (Z2) mit Masse verbunden.

Die zweite Elektrode des dritten Kondensators (C3) ist zudem mit einer Schalteinrichtung (S) verbunden, die wiederum über eine zweite Diode (D2), die zum Schutz in Durchlaßrichtung geschaltet ist, und einen dritten Widerstand (R3) mit dem Spannungsregler (SR) verbunden ist. Der Mikrorechner (MR) weist einen Ausgang (A) auf, der elektrisch leitend mit dem Steuereingang der Schalteinrichtung (S) verbunden ist. Bei dem Vorliegen eines Fehlersignals erzeugt der Mikrorechner (MR) einen Schaltbefehl für die Schalteinrichtung (S) an dem Ausgang (A), die die Schaltstrecke zwischen dem dritten Kondensator und der zweiten Diode (D2), die als Schutzdiode angeordnet ist, leitend schaltet, so daß der dritte Kondensator (C3) sich über den dritten Widerstand (R3) mit einer vorgegebenen Zeitkonstanten entladen kann und bei Ausfall der primären Wechselspannung der Wechselspannungsquelle sicherstellt, daß der Mikrorechner über eine vorgegebene Zeit mit einer konstanten Spannung versorgt wird, so daß dieser z. B. Abschaltvorgänge und Sicherheitsschaltungen einleiten kann, sobald ein Fehlersignal aufgrund der gemessenen Spannung an der zweiten Klemme (K2) vorliegt. Der Mikrorechner kann dabei sowohl direkt Funktionen schalten als auch mit weiteren Mikrorechnern oder Bordrechnern verbunden sein, um diese anzusteuern.

Im folgenden wird kurz die Wirkung der Einrichtung unter Zuhilfenahme der Zeichnung beschrieben.

Bei ordnungsgemäßem Betrieb der Wechselspannungsquelle (W) wird der Mikrorechner (MR) über den Transformator (T), den ersten Gleichrichter (G1) und den Spannungsregler (SR) mit einer konstanten Gleichspannung versorgt. Bei diesem normalen Betriebszustand wird dem Mikrorechner (MR) über die zweite Klemme (K2), den ersten Widerstand (R1) und die erste Diode (D1) eine Spannung zugeführt, die aufgrund der Wirkungsweise der ersten Diode (D1) lediglich aus den positiven Halbwellen der Wechselspannung an der zweiten Klemme (K2), die proportional zu der primären Wechselspannung ist, besteht. Aufgrund dieser, dem Mikrorechner (MR) zugeführten Wechselspannung berechnet dieser fortlaufend den Effektivwert der Spannung an der zweiten Klemme (K2). Da die Spannung an der zweiten Klemme (K2) direkt dem Spannungsverlauf der primären Wechselspannung von der Wechselspannungsquelle (W) folgt, ist es somit möglich, daß der Mikrorechner (MR) nahezu unverzögert aufgrund seiner Berechnungen ein Fehlersignal erzeugen kann, wenn die Spannung an der zweiten Klemme (K2) und damit die primäre Wechselspannung der Wechselspannungsquelle (W) von einem vorgegebenen Sollwert oder von Sollwerten abweicht. Wird eine solche Abweichung durch den Mikrorechner (MR) berechnet, so erzeugt dieser ein Fehlersignal und an seinem Ausgang (A) ein Umschaltsignal für die Schalteinrichtung (S). Während der Spannungsregler (SR) über den ersten Kondensator (C1) mit niedriger Kapazität kurzzeitig mit einer ausreichenden Spannung versorgt werden kann, wird durch das Umschalten der Schalteinrichtung (S) der dritte Kondensator (C3) über den dritten Widerstand (R3) mit dem Spannungsregler (SR) verbunden. Der dritte Kondensator (C3) weist dabei bei einer höheren Grundspannung eine höhere Speicherenergie als der erste Kondensator (C1) auf und kann den Spannungsregler (SR) z. B. für etwa 5 Sekunden, indem er sich über den dritten Widerstand (R3) entlädt, mit einer ausreichenden Spannung versorgen. Diese Zeit kann je nach Anforderungen auch größer oder kleiner gewählt werden. Z. B. bei einem Ausfall der primären Wechselspannung von der Wechselspannungsquelle (W) ist somit sichergestellt, daß der Mikrorechner (MR) über eine Zeit, die ausreicht, damit dieser sicherheitsrelevante Schaltungen durchführt, mit einer konstanten Gleichspannung versorgt wird. Sobald der Mikrorechner (MR) ein Fehlersignal erzeugt hat, kann der Mikrorechner (MR) z. B. andere Mikrorechner (MR) oder andere Einrichtungen, z. B. eines Flugzeugs, in einen Mode schalten, der durch eine geringere Stromaufnahme gekennzeichnet ist, wodurch ein sicherer Weiterbetrieb des Flugzeugs, z. B. mit einer Notstromversorgung, gewährleistet wird und vermieden wird, daß z. B. fehlerhafte Ansteuersignale von Bordcomputern mit Mikrorechnern erzeugt werden. Der Mikrorechner (MR) überwacht nach erzeugten Fehlersignalen und vorgenommenen Schaltvorgängen weiterhin die Spannung an der zweiten Klemme (K2), um z. B. bei wieder einwandfrei funktionierender primärer Wechselspannung die zuvor getätigten Schaltvorgänge zurückzusetzen.

Bei einem anderen Ausführungsbeispiel kann der Spannungsregler auch mit weiteren Mikrorechnern (MR) verbunden sein und diese mit einer konstanten Spannung versorgen. Bei einer solchen Schaltungsausführung kann der Spannungsregler (SR) auch direkt von dem Mikrorechner (MR) über seinen Ausgang (A) ansteuerbar sein, damit dieser z. B. anderen Mikrorechnern eine geringere Leistung im Fehlerfall zuführt.

Die Schalteinrichtung (S) kann z. B. als Relais, Thyristor, Triac oder Transistor ausgebildet sein.

## Patentansprüche

1. Einrichtung zur galvanisch getrennten Gleichspannungsversorgung eines Mikrorechners aus einer Wechselspannungsquelle mit folgenden Merkmalen:
a) einer Wechselspannungsquelle (W),
b) einem Transformator (T), dessen Primärwicklung mit der Wechselspannungsquelle (W) verbunden ist,
c) einem ersten Gleichrichter (G1), der mit einer Sekundärwicklung des Transformators (T) verbunden ist,
d) einem Spannungsregler (SR), der zum einen über eine erste Klemme (K1) sowohl mit dem Ausgang des ersten Gleichrichters (G1) als auch über einen ersten Kondensator (C1) mit Masse verbunden ist und zum anderen mit dem mindestens einen Mikrorechner (MR) verbunden ist,
e) einer zweiten Klemme (K2) in der Verbindung zwischen der Sekundärwicklung des Transformators und dem ersten Gleichrichter (G1), die mit dem Mikrorechner (MR) verbunden ist, wobei der Mikrorechner (MR) Fehlersignale erzeugt, wenn die Spannung an der zweiten Klemme (K2) von einer Sollspannung abweicht,
f) einer Spannungsanpaßeinrichtung und einer Schutzeinrichtung in der Verbindung zwischen der zweiten Klemme (K2) und dem Mikrorechner (MR),
g) einer Schalteinrichtung (S), die mit dem Mikrorechner (MR) verbunden ist und in Abhängigkeit von den Fehlersignalen des Mikrorechners (MR) umsteuerbar ist,
h) einem dritten Kondensator (C3), dessen erste Elektrode mit Masse und dessen zweite Elektrode zum einen mit dem Transformator (T) verbunden ist und zum anderen über die Schalteinrichtung (S) und einen dritten Widerstand (R3) mit dem Spannungsregler (SR) verbunden ist.

2. Einrichtung nach Anspruch 1, dadurch gekennzeichnet, daß die Spannungsanpaßeinrichtung aus einer Reihenschaltung eines ersten Widerstands (R1) und einer ersten Diode (D1) in der Verbindung zwischen der zweiten Klemme (K2) und dem Mikrorechner (MR) und einem zweiten Widerstand (R2) zwischen der ersten Diode (D1) und Masse besteht.

3. Einrichtung nach Anspruch 2, dadurch gekennzeichnet, daß die Schutzeinrichtung einen Tiefpaßfilter, bestehend aus einem zweiten Kondensator (C2) und dem ersten Widerstand (R1), aufweist.

4. Einrichtung nach Anspruch 3, dadurch gekennzeichnet, daß die Schutzeinrichtung eine erste Z-Diode (Z1) aufweist, die in der Verbindung zwischen der ersten Diode (D1) und Masse angeordnet ist.

5. Einrichtung nach Anspruch 4, dadurch gekennzeichnet, daß eine zweite Diode (D2) in der Verbindung zwischen der Schalteinrichtung (S) und dem dritten Widerstand (R3) angeordnet ist.

6. Einrichtung nach Anspruch 5, dadurch gekennzeichnet, daß die zweite Elektrode des dritten Kondensators (C3) über eine dritte Klemme (K3) sowohl mit dem Transformator (T) als auch über eine zweite Z-Diode (Z2) mit Masse verbunden ist.

7. Einrichtung nach Anspruch 6, dadurch gekennzeichnet, daß ein zweiter Gleichrichter (G2) zum einen über einen vierten Widerstand (R4) mit der dritten Klemme (K3) verbunden ist und zum anderen mit einer Sekundärwicklung des Transformators (T) verbunden ist.

8. Einrichtung nach Anspruch 7, dadurch gekennzeichnet, daß in der Verbindung zwischen der Wechselspannungsquelle (W) und der Primärwicklung des Transformators (T) eine Sicherungseinrichtung (SE) angeordnet ist.

9. Gleichspannungsversorgungseinrichtung von Mikrorechnern in Bordnetzen von Flugzeugen mit einer Einrichtung nach mindestens einem der vorstehenden Ansprüche.

## Claims

1. Arrangement for the electrically isolated DC voltage supply of a microcomputer from an AC voltage source, having the following features:
a) an AC voltage source (W),
b) a transformer (T) whose primary winding is connected to the AC voltage source (W),
c) a first rectifier (G1) connected to the secondary winding of the transformer (T),
d) a voltage regulator (SR) connected on the one hand via a first terminal (K1) both to the output of the first rectifier (G1) and via a first capacitor (C1) to earth, and on the other hand to the at least one microcomputer (MR),
e) a second terminal (K2) which is in the connection between the secondary winding of the transformer and the first rectifier (G1) and is connected to the microcomputer (MR), the microcomputer (MR) producing error signals when the voltage at the second terminal (K2) differs from a desired voltage,
f) a voltage matching device and a protective device in the connection between the second terminal (K2) and the microcomputer (MR),
g) a switch device (S) which is connected to the microcomputer (MR) and is switchable in accordance with the error signals from the microcomputer (MR),
h) a third capacitor (C3) whose first electrode is connected to earth and whose second electrode is connected on the one hand to the transformer (T) and on the other hand via the switch device (S) and a third resistor (R3) to the voltage regulator (SR).

2. Arrangement according to claim 1, characterised in that the voltage matching device consists of, in series connection, a first resistor (R1) and a first diode (D1) in the connection between the second terminal (K2) and the microcomputer (MR), and a second resistor (R2) between the first diode (D1) and earth.

3. Arrangement according to claim 2, characterised in that the protective device has a low pass filter consisting of a second capacitor (C2) and the first resistor (R1).

4. Arrangement according to claim 3, characterised in that the protective device has a first Zener diode (Z1) arranged in the connection between the first diode (D1) and earth.

5. Arrangement according to claim 4, characterised in that a second diode (D2) is arranged in the connection between the switch device (S) and the third resistor (R3).

6. Arrangement according to claim 5, characterised in that the second electrode of the third capacitor (C3) is connected via a third terminal (K3) both to the transformer (T) and via a second Zener diode (Z2) to earth.

7. Arrangement according to claim 6, characterised in that a second rectifier (G2) is connected on the one hand via a fourth resistor (R4) to the third terminal (K3) and on the other hand to a secondary winding of the transformer (T).

8. Arrangement according to claim 7, characterised in that a safety fuse device (SE) is arranged in the connection between the AC voltage source (W) and the primary winding of the transformer (T).

9. Arrangement for the DC voltage supply of microcomputers in the on board electrical system of aircraft having an arrangement according to at least one of the preceding claims.

## Revendications

1. Dispositif pour l'alimentation en courant continu avec séparation galvanique d'un micro-calculateur à partir d'une source de tension alternative, ayant les particularités de posséder:
a) une source de tension alternative (W),
b) un transformateur (T) dont l'enroulement primaire est raccordé à la source de tension alternative (W),
c) un premier redresseur (G1) relié à un enroulement secondaire du transformateur (T),
d) un régulateur de tension (SR) relié d'une part par une première borne (K1) à la fois à la sortie du premier redresseur (G1) et à travers un premier condensateur (C1) à la masse et, d'autre part, au micro-calculateur (MR) ou à plusieurs micro-calculateurs,
e) une deuxième borne (K2) prévue dans la liaison entre l'enroulement secondaire du transformateur et le premier redresseur (G1) et reliée au micro-calculateur (MR), lequel produit des signaux de dérangement lorsque la tension sur la deuxième borne (K2) s'écarte d'une tension prescrite,
f) un dispositif adaptateur de tension et un dispositif de protection dans la liaison entre la deuxième borne (K2) et le micro-calculateur (MR),
g) un dispositif de commutation (S) relié au micro-calculateur (MR) et commutable en fonction des signaux de dérangement produits par celui-ci, et
h) un troisième condensateur (C3) dont une première électrode est reliée à la masse et la seconde électrode est reliée d'une part au transformateur (T) et d'autre part, à travers le dispositif de commutation (S) et une troisième résistance (R3), au régulateur de tension (SR).

2. Dispositif selon la revendication 1, caractérisé en ce que le dispositif adaptateur de tension est composé du montage en série d'une première résistance (R1) et d'une première diode (D1) dans la liaison entre la seconde borne (K2) et le micro-calculateur (MR), ainsi que d'une deuxième résistance (R2) entre la première diode (D1) et la masse.

3. Dispositif selon la revendication 2, caractérisé en ce que le dispositif de protection comprend un filtre passe-bas constitué d'un deuxième condensateur (C2) et de la première résistance (R1).

4. Dispositif selon la revendication 3, caractérisé en ce que le dispositif de protection comporte une première diode Zener (Z1) connectée dans la liaison entre la première diode (D1) et la masse.

5. Dispositif selon la revendication 4, caractérisé en ce qu'une deuxième diode (D2) est connectée dans la liaison entre le dispositif de commutation (S) et la troisième résistance (R3).

6. Dispositif selon la revendication 5, caractérisé en ce que la seconde électrode du troisième condensateur (C3) est reliée à la fois à travers une troisième borne (K3) au transformateur (T) et à travers une seconde diode Zener (Z2) à la masse.

7. Dispositif selon la revendication 6, caractérisé en ce qu'un second redresseur (G2) est relié d'une part à travers une quatrième résistance (R4) à la troisième borne (K3) et d'autre part à un enroulement secondaire du transformateur (T).

8. Dispositif selon la revendication 7, caractérisé en ce qu'un dispositif de sécurité (SE) est placé dans la liaison entre la source de tension alternative (W) et l'enroulement primaire du transformateur (T).

9. Alimentation en courant continu de micro-calculateurs dans des réseaux de bord d'avions, comprenant un dispositif selon au moins une des revendications précédentes.
